# FASCICULE DE BREVET EUROPEEN

(11) **EP 2 750 524 B1**
(45) Date de publication et mention de la délivrance du brevet: **26.08.2015**
(21) Numéro de dépôt: 12758534.7
(22) Date de dépôt: 08.08.2012
(51) Int. Cl.: A23N 1/02, B30B 9/02, C12G 1/00

(54) **PROCÉDÉ ET DISPOSITIF DE FOULAGE DYNAMIQUE DE FRUITS**
VERFAHREN UND VORRICHTUNG ZUR DYNAMISCHEN AUFFÄDELUNG VON FRÜCHTEN
METHOD AND DEVICE FOR DYNAMICALLY TREADING FRUIT

(30) Priorité: 30.08.2011 FR 1102629
(43) Date de publication de la demande: 09.07.2014
(73) Titulaire: PELLENC (Société Anonyme), 84120 Pertuis (FR)
(72) Inventeur: PELLENC, Roger, 84120 Pertuis (FR); BES, Magali, 11120 Saint Marcel sur Aude (FR); SAMSON, Alain, 34750 Villeneuve les Maguelone (FR); SALMON, Jean-Michel, 34170 Castelnau le Lez (FR)
(74) Mandataire: Marek, Pierre
(86) Numéro de dépôt international: PCT/FR2012/000333
(87) Numéro de publication internationale: WO 2013/030468

(56) Documents cités:
- FR-A- 1 501 470
- FR-A- 1 595 035
- US-A- 1 635 453
- US-A- 2 325 426
- US-A- 2 541 264
- US-A- 4 957 043
- US-A- 5 359 926

## Description

La présente invention concerne un procédé et un dispositif de foulage dynamique pour l'éclatement de baies.

En particulier, l'invention est avantageusement applicable à l'éclatement du raisin à partir de la vendange éraflée ou en grappes entières, pour l'élaboration des vins blancs, rosés ou rouges.

Dans un processus de vinification au terme duquel le raisin se trouve transformé en vin, le foulage est l'opération qui consiste à presser ou écraser les grains de raisin pour les éclater et en libérer les constituants afin d'obtenir un moût qui se trouve au contact des peaux.

Il s'agit de réaliser, au travers de la présente innovation, un éclatement des fruits, voire de certains légumes, dans le but d'augmenter les échanges entre les phases liquides et solides au sein du moût complet ainsi obtenu qui sera réutilisé ensuite par exemple dans un processus de macération.

Dans le domaine de la vinification, le procédé et la machine de foulage selon l'invention consistent à éclater les baies de raisin pour obtenir un moût destiné ensuite à la macération, sans écraser ni les pépins, ni les éventuelles rafles ou autres déchets végétaux (feuilles, sarments, ...), dont l'écrasement pourrait libérer et diffuser des substances indésirables pour une bonne vinification (libération d'huile ou de composés polyphénoliques en quantité non contrôlée).

Sur le plan oenologique notamment, on cherche à obtenir la plus grande surface de contact possible entre le jus et la peau des raisins, lors du processus de macération.

L'éclatement des baies de raisin aura pour effets :
- de mettre en contact avec le moût, les levures situées sur la surface externe de la peau des baies dans le cas de vinifications spontanées ;
- une bonne macération ou échange par dissolution des polyphénols (matière colorante, tanins, ...) situés principalement sur la surface interne de la peau de la baie, lors des vinifications en rouge ;
- de réduire le risque d'avoir des sucres réducteurs résiduels en fin de fermentation alcoolique.

Ce procédé d'obtention de moûts fermentaires de raisins peut s'appliquer aussi à différents fruits à pépins ou à noyaux, voire à des légumes.

Pour obtenir un moût de qualité et extraire en phase de macération le maximum de composés polyphénoliques, il faut s'assurer que les conditions suivantes se trouvent remplies :
- toutes les baies sans exception doivent être éclatées ;
- les baies ne doivent pas seulement être éclatées pour en libérer le jus et les pépins, mais il faut aussi que la peau soit entièrement développée afin de présenter dans le jus la plus grande surface d'échange possible pour l'ensemble de ses deux faces, interne et externe ;
- en cas de replis de la peau sur elle-même après éclatement, le jus doit pouvoir s'infiltrer et circuler librement sur toute la surface de la peau, interne ou externe. Il faut en effet extraire de la surface de la peau tous les composés indispensables à la vinification tels que les levures et les polyphénols (matière colorante, tanins, ...) ;
- en aucun cas, les pépins ou les morceaux de rafles ou de déchets végétaux ne doivent être éclatés ou altérés dans leur intégrité pour éviter la libération de substances indésirables à la qualité du moût.

Des fouloirs mécaniques existent sur le marché depuis de nombreuses années. Ils ont supplanté l'opération ancestrale de foulage à la main ou au pied qui consistait à écraser entre les doigts ou avec les pieds, les grappes issues de la vendange manuelle. Ils sont, pour la plupart, réalisés sur le principe de l'écrasement de baies entre deux rouleaux plus ou moins crantés tournant en sens inverse l'un de l'autre. Les différences entre les solutions proposées par les constructeurs sont liées à la géométrie des rouleaux ou de leur crantage, mais le principe reste basiquement le même.

Les rouleaux sont réalisés en matières alimentaires (caoutchouc, polyuréthanes) et surtout pas en matière dure (acier, inox par exemple) pour limiter les effets d'écrasement des pépins ou des déchets végétaux ou organiques.

La plupart de ces systèmes permet le réglage de l'écartement des rouleaux, pour un écrasement plus ou moins important des baies de raisins, mais aussi pour s'adapter à la taille des grains de raisins (différente en fonction des cépages) ou du débit de fruits à traiter.

Compte tenu de leur principe d'écrasement mécanique des baies (système laminoir, calandrage), ces fouloirs permettent bien entendu d'écraser ces baies afin de faire sortir le jus, la pulpe et les pépins. Mais leur principal inconvénient demeure que la baie ne s'ouvre que sur une faible surface, suffisante pour évacuer son contenu en traversant le fouloir. En effet, le passage au travers du fouloir de la baie l'écrase progressivement. La pression générée alors à l'intérieur du fruit permet de fendre la peau généralement au niveau de son point d'attache au pédicelle. Après la sortie des composants du grain de raisin et la traversée du fouloir, la peau du raisin s'aplatit sur elle-même et, lors du processus de macération, limite la surface d'échange entre le jus et la paroi intérieure de la peau de la baie. Cet état de fait induit un processus de macération plus long (afin d'extraire le plus possible les composés actifs situés à l'intérieur de la peau plus ou moins repliée sur elle-même) et moins qualitatif en termes oenologiques.

Compte tenu du concept de réalisation de ces fouloirs, une distance fixe sépare les deux rouleaux du fouloir pendant l'opération de foulage. Cette distance peut éventuellement être réglable afin de s'adapter à la taille moyenne des baies et à l'intensité du foulage souhaité. C'est cette distance qui définit donc la taille minimale du grain de raisin qui sera pressé entre les rouleaux. Les grains et les objets de taille inférieure à la distance entre les rouleaux pourront ainsi traverser le fouloir sans dommage, les autres objets étant systématiquement pressés entre les rouleaux.

Or, dans une vendange, la taille des grains de raisin n'est pas constante. Elle est fonction du cépage, mais aussi de l'état de maturation des grappes. Ainsi, on aura toujours une proportion non négligeable de grains qui seront d'un diamètre inférieur à la distance entre les deux rouleaux, grains qui ne seront donc pas écrasés et qui ne pourront participer efficacement au processus de macération. Ainsi, si l'on veut prendre en compte le foulage de la quasi-totalité des grains, on doit réduire la distance entre les rouleaux, au détriment du risque de devoir écraser ou altérer dans leur intégrité des pépins ou des matières végétales telles que les rafles.

Dans ce cas, l'inconvénient de ce type d'appareil est que le débit est lié à l'écartement des rouleaux, pour une longueur de rouleaux donnée. Une augmentation significative de ce débit peut donc amener à dégrader la qualité du foulage.

D'autre part, il est connu, par exemple dans l'élaboration des jus de fruits, de réaliser la dissociation des matières liquides et solides des fruits, par des procédés et machines de centrifugation.

Toutefois, pour la mise en oeuvre de ces procédés et machines, il est indispensable de procéder préalablement à une opération de broyage de toutes les parties des fruits, y compris par conséquent des noyaux ou pépins de ces derniers, afin de pouvoir ensuite extraire les parties liquides des moûts résultant de ce broyage, par centrifugation, au travers d'un filtre tournant à grande vitesse.

Dans le document FR-1.595.035, est décrit un fouloir de raisin. Selon ce document, l'écrasement des baies est réalisé au moyen d'un batteur rotatif muni de pales radiales, de sorte que cet écrasement est réalisé par l'action de battage des baies exercée directement par lesdites pales. Le batteur rotatif ne sert pas à communiquer une énergie cinétique aux baies, mais à éclater celles-ci par des frappes successives appliquées par ces pales, le long d'un tunnel. Il n'y a pas d'effet d'accélération centrifuge dans un seul plan des fruits.

Dans le document US-4.957.043, est décrit un dispositif de désintégration de fruits et comprenant une chambre ayant une ouverture d'entrée et un canal de sortie, cette chambre renfermant un rotor d'entraînement pour accélérer la vitesse des fruits autour d'un trajet circulaire et ensuite décharger les fruits à travers ledit canal tangentiel de sortie dans une chambre de désintégration, où les fruits s'écrasent sur une paroi fixe distante du rotor.

Selon ce document, les fruits sont déversés dans une chambre dans laquelle un rotor vertical, constitué par une pièce présentant un profil en U, est montée tournant autour d'un axe horizontal. Les fruits déversés par un dispositif d'alimentation sont introduits entre les ailes longitudinales de ce rotor en forme de U, et, sous l'effet de la force centrifuge, ils sont éjectés un à un dans un couloir débouchant dans une chambre de désintégration dans laquelle est installée une paroi fixe disposée en regard de la sortie du couloir et contre laquelle les fruits animés d'une énergie cinétique viennent s'écraser. Il semblerait qu'un seul fruit soit éjecté dans le couloir de communication chaque fois que l'une des extrémités ouvertes du rotor se présente en regard de l'entrée dudit couloir.

Un tel dispositif n'est pas envisageable, ni applicable, sur un plan pratique, au foulage de petits fruits tels que grains de raisin ou autres baies, si l'on considère que le passage un par un de ces derniers, de la chambre d'acquisition d'énergie cinétique vers la chambre de désintégration, via un couloir de communication, demanderait un temps excessivement long, tout à fait incompatible avec le foulage du raisin issu des vendanges. D'autre part, une partie de l'énergie cinétique communiquée par le rotor est dissipée lors du passage des fruits dans le couloir de communication. Le rendement de ce dispositif serait donc nettement insuffisant pour une application au foulage du raisin. Enfin, les fruits se trouvent projetés de façon orthogonale au plan fixe d'éclatement, un tel processus ne permettant pas un développement de la peau des fruits indispensable pour une macération dans la vinification. Cette projection orthogonale des grains a, en effet, pour conséquence, d'écraser le raisin sur lui-même pour en libérer ses constituants, avec, pour résultat, un effet identique à celui obtenu par le foulage traditionnel au moyen des machines à rouleaux, c'est-à-dire le repli de la peau du raisin sur elle-même au lieu d'être déployée dans le moût.

Comme indiqué précédemment, l'invention est essentiellement et avantageusement utilisable pour réaliser la séparation des phases liquides et solides des fruits à jus, notamment des fruits se présentant sous forme de baies, tels que le raisin. Cependant, on n'exclut pas l'application de l'invention au foulage de certains légumes moyennant des adaptations des fouloirs en fonction de la nature des légumes à traiter. Dans ces conditions, le mot « fruit », ou encore le mot « baie », doit être considéré comme l'équivalent du terme « légume » dans la description qui suit et dans les revendications.

La présente invention a notamment pour but de remédier aux inconvénients susmentionnés des fouloirs à rouleaux et a pour objet de mettre à la disposition des professionnels intéressés par l'utilisation de ce type de matériel, un fouloir dynamique permettant un éclatement complet des baies le traversant, et d'en libérer les matières liquides et solides, afin de constituer un moût qualitatif, en préambule d'opérations ultérieures de macération ou de fermentation.

Selon l'invention, cet objectif est atteint grâce :
- à un procédé suivant lequel les baies sont déversées dans une enceinte de foulage et réceptionnées sur un éjecteur rotatif, les baies étant animées d'une énergie cinétique sous l'effet de la force centrifuge communiquée par la rotation dudit éjecteur rotatif et projetés contre une paroi d'éclatement fixe, à une vitesse déterminée pour que la rencontre des baies avec ladite paroi d'éclatement se produise sous forme de choc ou impact provoquant l'éclatement des baies ce procédé étant remarquable en ce que les baies sont réceptionnées sur un éjecteur rotatif monté tournant autour d'un axe vertical et projetés, sous l'effet de la force centrifuge résultant de la rotation de cet éjecteur rotatif, contre une paroi d'éclatement fixe entourant ledit éjecteur rotatif ou disposée en regard du bord périphérique de projection de ce dernier.
- à un fouloir dynamique comprenant une enceinte de foulage comportant, en considérant le sens du trajet des baies dans le fouloir, une ouverture amont d'introduction des baies et une ouverture aval d'évacuation des moûts résultant du foulage des baies, comportant encore un éjecteur rotatif permettant de communiquer une énergie cinétique aux baies déversées sur ledit éjecteur rotatif, et de projeter lesdits baies contre une paroi d'éclatement, ce fouloir étant remarquable en ce que l'éjecteur rotatif est monté tournant autour d'un axe vertical et une paroi d'éclatement fixe est disposée autour dudit éjecteur rotatif ou en regard du bord périphérique de projection de ce dernier, dont la rotation permet de projeter les baies, sous l'effet de la force centrifuge qui leur est communiquée par cette rotation, contre ladite paroi d'éclatement fixe, sous forme de chocs ou d'impacts provoquant l'éclatement des baies.

Selon une autre disposition caractéristique, les baies sont projetés tangentiellement à la surface interne d'impact de la paroi d'éclatement fixe.

Selon un mode de mise en oeuvre préféré, les baies sont projetés tangentiellement à la surface courbe de la paroi d'éclatement fixe laquelle peut être cylindrique, ou tronconique, ou polygonale.

Selon un mode d'exécution avantageux, l'éjecteur rotatif est constitué par un plateau tournant disposé horizontalement, de préférence circulaire et/ou plat.

Selon un mode d'exécution préféré, le bord d'éjection de la paroi d'éclatement fixe est circulaire.

Selon un autre mode de réalisation préféré, la paroi d'éclatement fixe est rigide.

Selon une autre disposition caractéristique, la surface supérieure du plateau rotatif est munie d'ailettes de guidage angulairement espacées et s'étendant de la partie centrale dudit plateau jusqu'à la périphérie de ce dernier.

De manière avantageuse, lesdites ailettes de guidage ont une conformation courbe (concave).

Selon un autre mode de mise en oeuvre, l'éjecteur rotatif est constitué par un tronc de cône renversé.

Selon une autre disposition caractéristique, la paroi interne du tronc de cône est munie d'ailette de guidage angulairement espacées et s'étendant de la partie basse dudit tronc de cône jusqu'au bord périphérique de projection de ce dernier.

Selon une autre disposition caractéristique, la paroi fixe d'éclatement disposée autour du plateau rotatif ou en regard du bord périphérique de projection du tronc de cône renversé présente une forme conique tronquée.

Selon une autre disposition caractéristique, un espace est ménagé entre le bord périphérique d'éjection de l'éjecteur rotatif et la paroi d'écrasement fixe.

Selon un mode d'exécution avantageux, une jupe circulaire est disposée au-dessous et dans la continuité de la paroi fixe d'éclatement, cette jupe circulaire étant munie intérieurement d'ailettes de freinage angulairement espacées.

Selon une autre disposition caractéristique du procédé de foulage et du fouloir dynamique de l'invention, des moyens connus en soi, permettent de régler l'énergie cinétique ou la vitesse d'éjection des baies en sortie de l'éjecteur rotatif, de façon à permettre l'éclatement de ceux-ci, mais à ne pas éclater les pépins ou autres déchets végétaux plus durs que les constituants desdits baies en cours de foulage.

Le procédé et le fouloir dynamique selon l'invention procurent notamment les avantages ci-après :
- un éclatement des baies sans écraser les pépins ni les rafles ou autres déchets végétaux dont l'écrasement pourrait libérer des substances indésirables et les diffuser dans la phase liquide ;
- obtention d'un moût de qualité exempt de substances indésirables ;
- éclatement de toutes les baies introduites dans le fouloir, quelle que soit leur taille ;
- obtention d'un moût dans lequel le jus est en contact, dans des conditions optimum, avec la surface intérieure et la surface extérieure de la peau des fruits.
- un grand débit avec un excellent rendement.

Les buts, caractéristiques et avantages ci-dessus et d'autres encore ressortiront mieux de la description qui suit et des dessins annexés dans lesquels :
- la figure 1 est une vue en perspective d'un premier exemple de réalisation du fouloir ;
- la figure 2 est une vue en perspective montrant le fouloir en position ouverte permettant le nettoyage du plateau rotatif centrifuge et de la chambre de foulage ;
- la figure 3 est une vue en coupe axiale du fouloir ;
- la figure 4 est une vue en perspective du plateau rotatif ;
- la figure 5 est une vue analogue à la figure 3 montrant le fouloir en situation de travail ;
- la figure 6 est une vue en plan et en coupe selon la ligne 6-6 de la figure 5 ;
- la figure 7 est une vue analogue à la figure 3, considérée perpendiculairement, illustrant le fouloir en cours de travail ;
- la figure 8 est une vue en plan et en coupe selon la ligne 8-8 de la figure 7 ;
- la figure 9 est une vue à caractère schématique d'un exemple de réalisation du fouloir à éjecteur rotatif de forme tronconique.

On se reporte auxdits dessins pour décrire des exemples intéressants, quoique nullement limitatifs, de mise en oeuvre du procédé de foulage et de réalisation du fouloir dynamique selon l'invention.

Dans la description qui suit et dans les revendications, les termes « amont » et « aval » se réfèrent au sens du trajet des fruits et des moûts à travers le fouloir.

Selon l'invention, la séparation des matières liquides et solides des baies est réalisée par le transfert d'une énergie cinétique entre lesdits baies et une paroi fixe d'éclatement.

Le fouloir dynamique selon l'invention comprend une enceinte de foulage 11 comportant, en considérant le sens du trajet des baies dans le fouloir, une ouverture amont d'introduction 13 des baies et une ouverture aval d'évacuation 14 des moûts résultant du foulage des baies, comportant encore un éjecteur rotatif 12, 12' permettant de communiquer une énergie cinétique aux baies introduits dans ladite enceinte de foulage 11, et de projeter lesdits baies contre une paroi d'éclatement fixe 10, 10', et, selon une première disposition caractéristique, ce fouloir est remarquable en ce que l'éjecteur rotatif est monté tournant autour d'un axe vertical 18 et une paroi d'éclatement fixe est disposée autour dudit éjecteur rotatif ou en regard du bord périphérique de projection de ce dernier, dont la rotation permet de projeter les baies, sous l'effet de la force centrifuge qui leur est communiquée par cette rotation, contre ladite paroi d'éclatement fixe, sous forme de chocs ou d'impacts provoquant l'éclatement des baies.

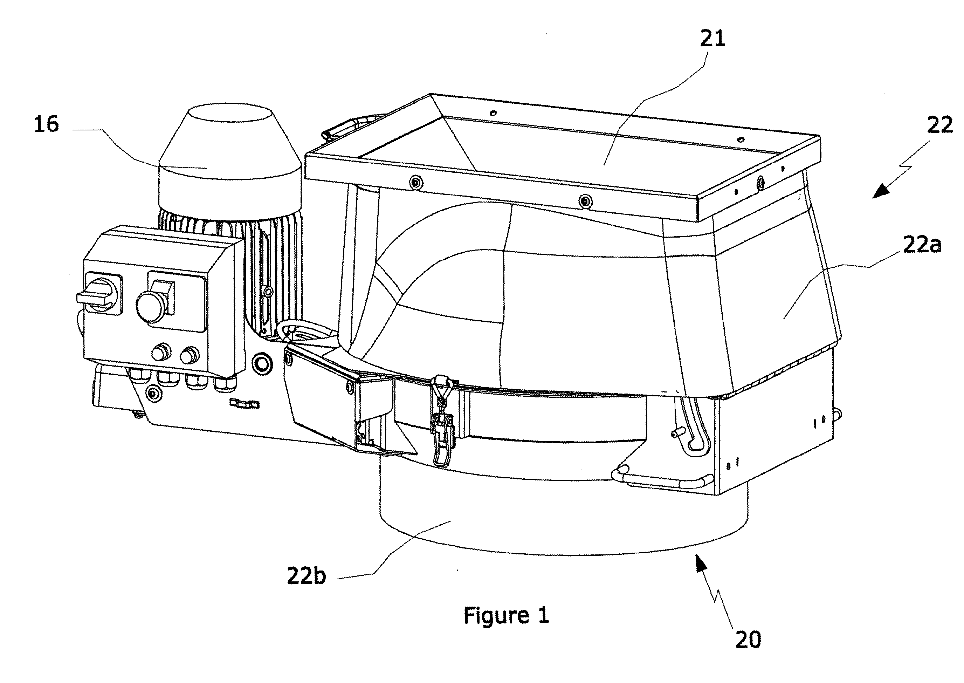

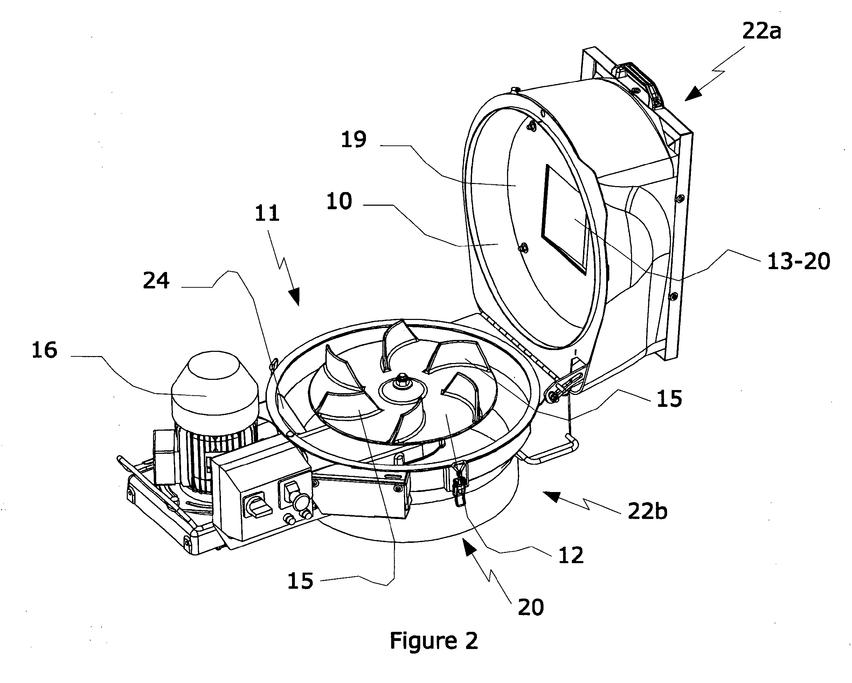

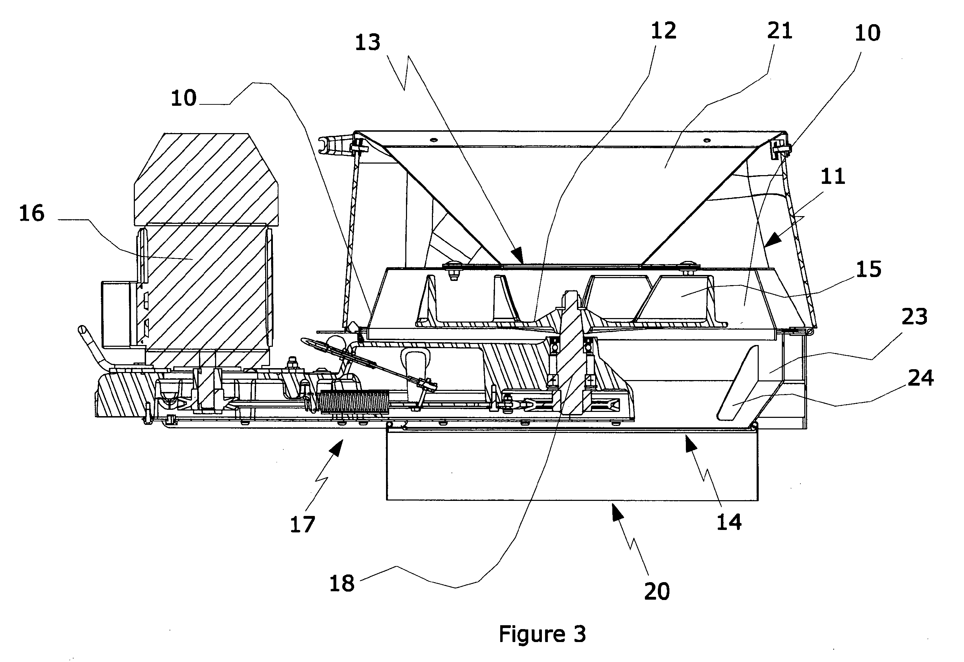

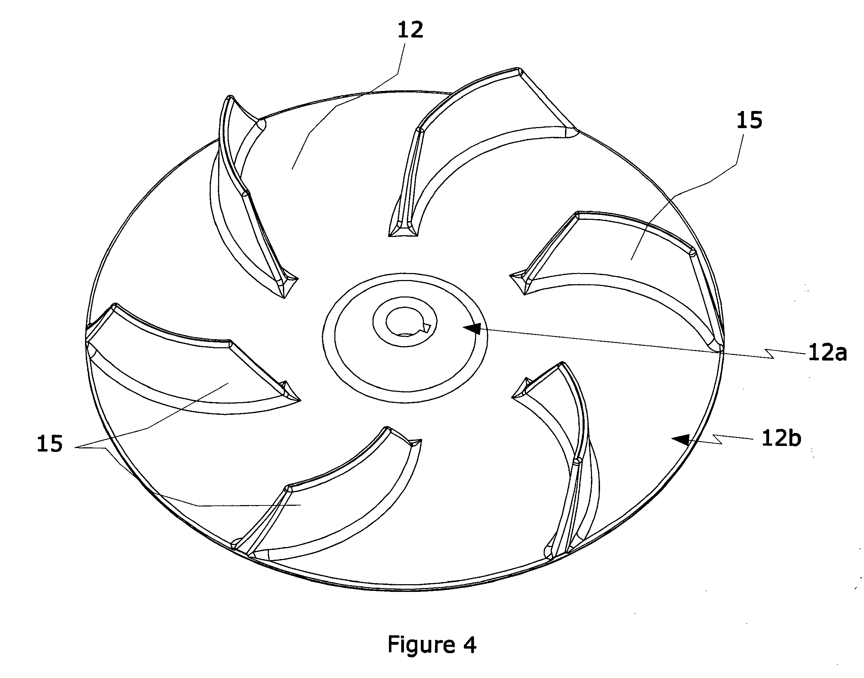

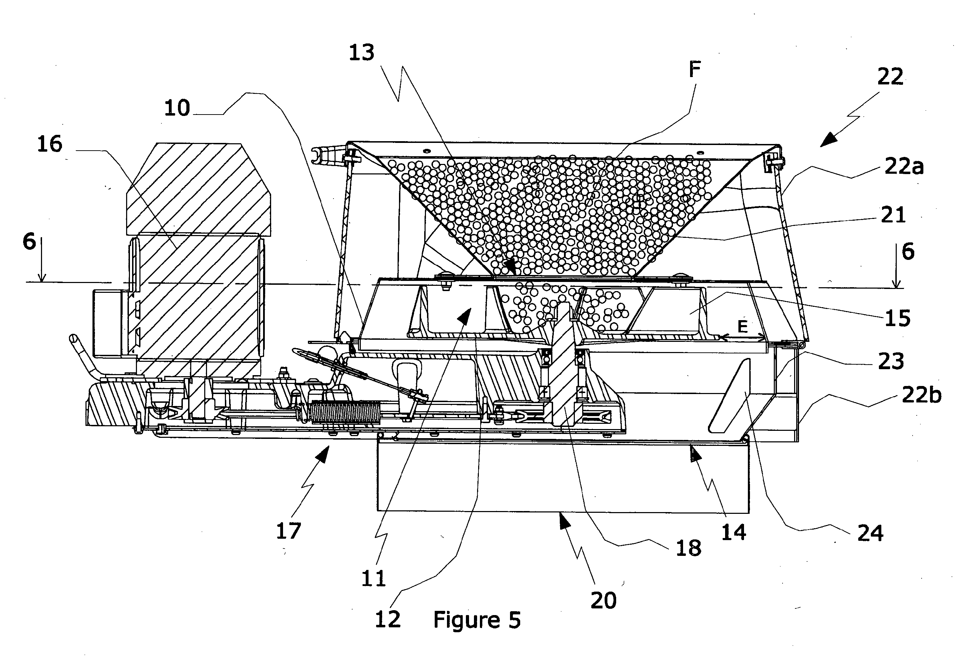

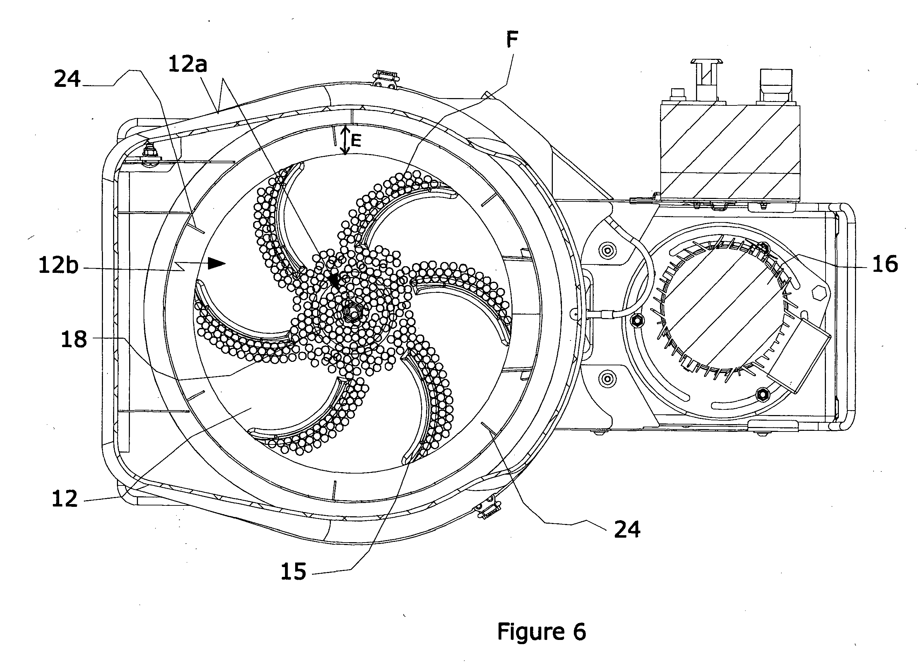

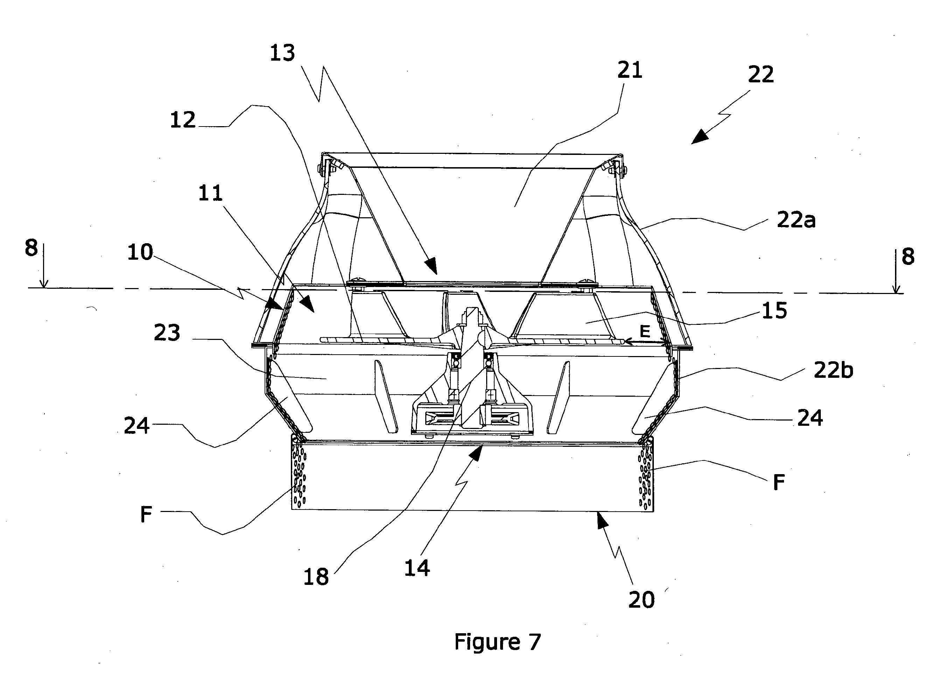

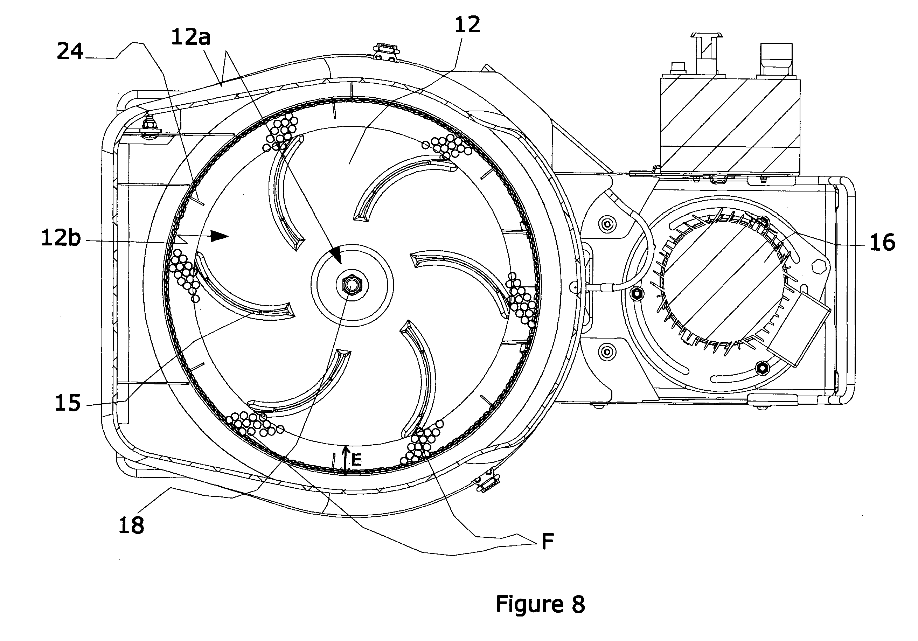

Selon l'exemple de réalisation illustré aux figures 1 à 8, le fouloir dynamique pour l'éclatement de baies, en particulier du raisin comprend une enceinte de foulage 11 comportant une ouverture amont 13 d'introduction des baies et une ouverture aval 14 d'évacuation des moûts résultant du foulage desdits baies, en considérant le sens du trajet des baies à l'intérieur du fouloir.

Dans l'enceinte de foulage 11, est monté un éjecteur rotatif 12 permettant de communiquer une énergie cinétique aux fruits F déversés sur ledit éjecteur rotatif et de les projeter contre la paroi d'éclatement fixe 10 disposée autour dudit éjecteur rotatif 12.

Selon ce mode d'exécution, l'éjecteur rotatif est constitué par un plateau tournant 12, sur lequel tombent les fruits F, par exemple en partie centrale, déversés dans l'enceinte de foulage 11. Ce plateau 12 est monté tournant autour d'un axe vertical 18 et il est disposé horizontalement. Il présente, de préférence, une forme circulaire. Des moyens moteurs connus en soi permettent l'entraînement motorisé en rotation du plateau d'éjection 12, à grande vitesse, cette vitesse étant déterminée et réglable pour permettre de projeter lesdits fruits sous l'effet de l'énergie cinétique qui leur est communiquée et de la force centrifuge, contre la paroi d'éclatement 10 disposée autour du plateau rotatif. De la sorte, la rencontre des fruits F avec ladite paroi d'éclatement fixe 10 se produit sous forme de chocs ou d'impacts entraînant leur éclatement, sans toutefois provoquer l'éclatement des pépins ou autres constituants indésirables.

Le plateau d'éjection 12 peut avoir une forme plate et il est, par exemple, installé dans le fond de l'enceinte de foulage.

Un espace annulaire E est ménagé entre le bord d'éjection 12b du plateau tournant 12 et la paroi d'éclatement 10 disposée autour de ce dernier. Cet espace annulaire peut avoir une largeur de l'ordre de 30 mm à 40 mm, cette dimension étant donnée à titre d'exemple non limitatif seulement.

Le plateau d'éjection 12 peut être avantageusement muni, sur sa face supérieure, d'une pluralité d'ailettes de guidage 15 angulairement espacées et s'étendant de la partie centrale 12a dudit plateau jusqu'à la périphérie 12b de ce dernier. Avantageusement, ces ailettes de guidage 15 ont une forme courbe concave, en considérant le sens de rotation du plateau 12. Elles peuvent avoir une hauteur variée, en fonction des dimensions du fouloir, elles-mêmes dépendantes de la nature des produits à traiter, par exemple, une hauteur de l'ordre de 60 mm pour le foulage du raisin dont les baies présentent un diamètre de l'ordre de 5 à 30 mm, selon les cépages et la maturité.

Les ailettes 15 peuvent être réalisées en matériaux rigides, par exemple en acier inoxydable, ou en matériaux élastiques ou viscoélastiques, par exemple en polyuréthane ou en caoutchouc alimentaire. Ces ailettes peuvent être formées directement dans le même matériau que l'éjecteur proprement dit, ou être rapportées sur ce dernier.

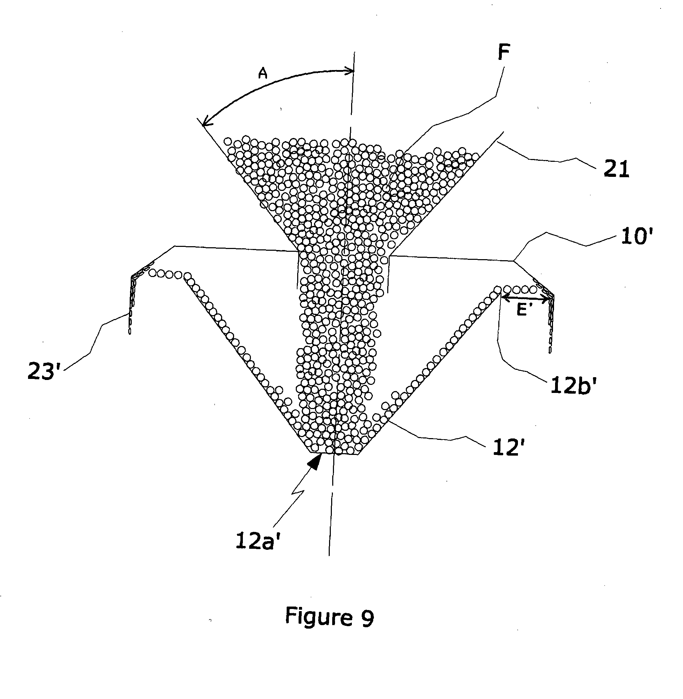

Selon l'exemple de réalisation illustré à la figure 9, l'éjecteur rotatif présente la forme d'un tronc de cône renversé 12'. La paroi latérale de ce tronc de cône peut présenter un angle d'inclinaison A compris entre 0° et 90° et, par exemple, un angle d'inclinaison de l'ordre de 30°. Le bord supérieur 12b' de la grande base de ce tronc de cône renversé, constitue le bord périphérique d'éjection de cet éjecteur rotatif 12'.

Une paroi d'éclatement fixe 10' est disposée autour du bord supérieur d'éjection 12b' du tronc de cône renversé 12'. Un espace annulaire E' est ménagé entre ledit bord supérieur d'éjection 12b' et ladite paroi d'éclatement fixe 10'. L'entraînement en rotation de l'éjecteur rotatif (plateau 12 ou tronc de cône 12') peut être assuré, de manière connue en soi, par toutes motorisations appropriées.

Par exemple, en ce qui concerne le plateau d'éjection 12, ces moyens peuvent comprendre, un moteur électrique 16 et un système de transmission approprié 17 permettant l'entrainement en rotation d'un arbre vertical 18 sur lequel peut-être calé ledit plateau, à une vitesse qui peut être constante ou réglable au moyen de tout système de réglage de vitesse approprié, de préférence dans une plage comprise entre 800 et 2000 tr/min.

La paroi d'éclatement fixe 10 est disposée autour du plateau rotatif 12. Cette paroi peut être constituée par la paroi latérale de l'enceinte de foulage 11. De manière avantageuse, cette paroi 10 présente une forme conique tronquée dont la partie supérieure est fermée par une paroi horizontale 19 dans laquelle est ménagée l'ouverture supérieure 13 d'introduction des fruits, laquelle se trouve disposée en amont du plateau 12, de préférence proche de sa partie centrale 12a. Cette ouverture communique avec l'ouverture de déchargement 20 d'une trémie 21 ou autre appareil d'alimentation.

Selon une disposition caractéristique avantageuse de l'invention, les fruits F sont projetés tangentiellement à la surface d'impact de la paroi d'éclatement 10 ou 10'.

La paroi d'éclatement fixe 10 ou 10' et plus précisément la surface interne d'impact de cette paroi, contre laquelle sont projetés les fruits F, peut avoir une forme circulaire ou tronconique ou polygonale (constituée d'une pluralité de facettes).

Le châssis 22 du fouloir peut être constitué d'une partie supérieure 22a solidaire des parois de l'enceinte de foulage 11, et d'une partie inférieure 22b sur laquelle est montée ladite partie supérieure 22a, avec une aptitude de basculement, au moyen de tout système d'articulation approprié. De la sorte, il est possible de basculer la partie supérieure 22a, afin d'ouvrir le fouloir et d'avoir ainsi accès au plateau rotatif et à la chambre de foulage, afin d'opérer des opérations de lavage ou de maintenance.

Le plateau rotatif 12 est disposé au dessus de la grande base de la paroi conique d'éclatement 10, laquelle délimite l'ouverture d'évacuation 14. Une jupe circulaire 23 est disposée au dessous et dans la continuité de la paroi fixe d'éclatement 10. Cette jupe circulaire est munie, intérieurement, en partie basse, d'ailettes 24 régulièrement espacées. L'extrémité inférieure de la jupe circulaire 23 délimite une ouverture qui peut être mise en relation avec un bac ou une cuve de récupération des moûts, ou avec un système d'acheminement de ces derniers jusqu'à un bac ou cuve en vue d'un traitement ultérieur desdits moûts, en fonction de la nature de ces derniers et des produits à l'élaboration desquels ils sont destinés.

On conçoit bien le fonctionnement du fouloir dynamique selon l'invention, en se reportant, par exemple, au mode d'exécution préféré et avantageux illustré aux figures 1 à 8. Les baies de raisins ou les fruits F sont amenés dans un bac récepteur relié, en sortie, à l'ouverture d'alimentation du fouloir via un dispositif d'alimentation constitué par la trémie 21.

En sortie de trémie 21, les baies de raisins qui ont une vitesse relative quasi-nulle sont déversées sur le plateau rotatif 12 de préférence au niveau de sa partie centrale 12a. La rotation à grande vitesse communique aux baies une accélération progressive générée par la force centrifuge qui les projette ainsi à l'extérieur dudit plateau. Elles acquièrent, de la sorte, à la sortie du plateau 12, une vitesse V qui est fonction de la vitesse de rotation du plateau, et donc une énergie cinétique fonction de cette même vitesse V et de la masse des baies ou fruits. Lorsqu'ils quittent le plateau 12, sous l'effet de la force centrifuge, les baies ou fruits possèdent l'énergie cinétique nécessaire pour être éclatés au contact de la paroi fixe 10.

Les phases liquide et solide contenant les différents constituants des baies de raisin ainsi séparées s'écoulent par gravité le long de ladite paroi fixe 10.

La vitesse de rotation du plateau 12 est de préférence constante, mais elle peut être éventuellement adaptée à d'autres types de fruits ou de baies, et/ou réglée en fonction du débit souhaité, et du niveau de maturité des fruits.

Après leur séparation résultant de leur projection à grande vitesse contre la paroi d'éclatement 10, les constituants des baies sont freinés par frottement sur ladite paroi. Ils s'écoulent alors par simple gravité, le long de la jupe circulaire 23 disposée au dessous et en continuité de la paroi d'éclatement 10, les ailettes 24 disposées, intérieurement, en partie basse de ladite jupe circulaire 23 permettant de stopper définitivement la rotation des constituants séparés et de canaliser leur flux dans une orientation verticale dans l'axe du fouloir.

Comme indiqué précédemment, le fouloir peut, selon un mode préféré de mise en oeuvre de procédé de l'innovation, comporter un dispositif permettant de faire varier la vitesse de rotation de l'éjecteur rotatif (plateau 12 ou tronc de cône renversé 12') pour adapter cette vitesse au type de baies à traiter, à leur état de maturation voire au débit de produit traversant le fouloir. Différentes formes de rotors (plateaux rotatifs) ou de profils de pales d'accélération peuvent être utilisés en fonction de l'intensité de foulage souhaité ou du type de produit à fouler.

Le fonctionnement du mode de réalisation illustré à la figure 9 est sensiblement identique à celui du dispositif illustré aux figures 1 à 8 qui vient d'être décrit.

Dans ce cas, les baies déversées dans l'éjecteur tronconique 12' sont propulsées en direction de la paroi latérale de l'éjecteur et sont entraînées dans un mouvement ascensionnel en direction du bord périphérique de projection 12b', sous l'effet de la force centrifuge et se trouvent éjectées contre la paroi fixe 10' disposée en regard dudit bord périphérique de projection, ce qui entraîne leur éclatement.

De préférence, la paroi interne de l'éjecteur tronconique est munie d'ailettes de guidages angulairement espacées et qui s'étendent de la partie basse 12a' jusqu'au bord périphérique de projection 12b' dudit éjecteur tronconique.

## Revendications

1. Procédé de foulage dynamique de baies, en particulier du raisin, suivant lequel les baies sont déversées dans une enceinte de foulage (11) et réceptionnées par un éjecteur rotatif (12, 12'), les baies (F) étant animées d'une énergie cinétique sous l'effet de la force centrifuge communiquée par la rotation dudit éjecteur rotatif et projetées contre une paroi d'éclatement fixe (10, 10'), à une vitesse déterminée pour que la rencontre des baies avec ladite paroi d'éclatement (10, 10') se produise sous forme de choc ou impact provoquant l'éclatement des baies, **caractérisé en ce que** les baies sont réceptionnées sur un éjecteur rotatif (12, 12') monté tournant autour d'un axe vertical (18) et projetées, sous l'effet de la force centrifuge résultant de la rotation de cet éjecteur rotatif, contre une paroi d'éclatement fixe (10, 10') entourant ledit éjecteur rotatif (12, 12') ou disposée en regard du bord périphérique de projection de ce dernier.

2. Procédé de foulage dynamique de baies, selon la revendication 1, **caractérisé en ce que** les baies (F) sont projetées tangentiellement à la surface interne de la paroi d'éclatement fixe (10, 10').

3. Procédé de foulage dynamique de baies, selon l'une des revendications 1 ou 2, **caractérisé en ce que** les baies (F) sont projetées tangentiellement à la surface courbe de la paroi d'éclatement (10, 10').

4. Procédé de foulage dynamique de baies, selon l'une quelconque des revendications 1 à 3, **caractérisé en ce que** l'éjecteur rotatif (12) est constitué par un plateau disposé horizontalement.

5. Procédé de foulage de baies, selon l'une quelconque des revendications 1 à 4, **caractérisé en ce que** la paroi d'éclatement (10, 10') est rigide.

6. Procédé de foulage de baies selon l'une quelconque des revendications 1 à 5, **caractérisé en ce qu'**il met en oeuvre des moyens connus en soi, permettant de régler l'énergie cinétique ou la vitesse d'éjection des baies en sortie de l'éjecteur rotatif, de façon à permettre l'éclatement de celles-ci, mais à ne pas éclater les pépins ou autres déchets végétaux plus durs que les constituants desdites baies en cours de foulage.

7. Fouloir dynamique pour le foulage de baies, en particulier du raisin, comprenant une enceinte de foulage (11) comportant, en considérant le sens du trajet des fruits dans le fouloir, une ouverture amont d'introduction (13) des baies et une ouverture aval d'évacuation (14) des moûts résultant du foulage des baies, comportant encore un éjecteur rotatif (12, 12') permettant de communiquer une énergie cinétique aux baies (F) introduites dans l'enceinte de foulage (11), et de projeter lesdites baies contre une paroi d'éclatement fixe (10, 10'), **caractérisé en ce que** l'éjecteur rotatif est monté tournant autour d'un axe vertical (18) et une paroi d'éclatement (10, 10') fixe est disposée autour dudit éjecteur rotatif (12, 12') ou en regard du bord périphérique de projection de ce dernier, dont la rotation permet de projeter les baies, sous l'effet de la force centrifuge qui leur est communiquée par cette rotation, contre ladite paroi d'éclatement fixe, sous forme de chocs ou d'impacts provoquant l'éclatement des baies.

8. Fouloir dynamique pour le foulage de baies, selon la revendication 7, **caractérisé en ce que** l'éjecteur rotatif (12) est constitué par un plateau disposé horizontalement.

9. Fouloir dynamique pour le foulage de baies selon la revendication 7, **caractérisé en ce que** l'éjecteur rotatif est constitué par un tronc de cône renversé (12') sur lequel sont déversées les baies introduites dans l'enceinte de foulage (11), des moyens d'entraînement en rotation de ce tronc de cône à grande vitesse permettant de projeter lesdites baies sous l'effet de l'énergie cinétique qui leur est communiquée et de la force centrifuge contre une paroi d'éclatement fixe (10') disposée autour ou en regard du bord périphérique de projection (12b') dudit tronc de cône.

10. Fouloir dynamique pour le foulage de baies, selon l'une quelconque des revendications 7 à 9, **caractérisé en ce que** la paroi fixe d'éclatement (10, 10') présente une forme courbe, cylindrique, ou tronconique, ou polygonale.

11. Fouloir dynamique pour le foulage de baies, selon l'une quelconque des revendications 7 à 10, **caractérisé en ce qu'**un espace (E, E') est ménagé entre le bord périphérique d'éjection (12b, 12b') de l'éjecteur rotatif (12, 12') et la paroi d'éclatement fixe (10, 10').

12. Fouloir dynamique pour le foulage de baies, selon l'une quelconque des revendications 7 à 11, **caractérisé en ce que** la paroi d'éclatement (10, 10') est rigide.

13. Fouloir dynamique pour le foulage de baies, selon l'une quelconque des revendications 7, 8 ou 10 à 12, **caractérisé en ce que** le plateau rotatif (12) est plat.

14. Fouloir dynamique pour le foulage de baies, selon l'une quelconque des revendications 7, 8 ou 10 à 13, **caractérisé en ce que** la surface supérieure du plateau rotatif (12) est munie d'ailettes de guidage (15) angulairement espacées et s'étendant de la partie centrale de ce plateau jusqu'à la périphérie de ce dernier.

15. Fouloir dynamique pour le foulage de baies, selon la revendication 14, **caractérisé en ce que** les ailettes de guidage (15) ont une conformation courbe (concave).

16. Fouloir dynamique pour le foulage de baies, selon la revendication 9, **caractérisé en ce que** la paroi latérale du tronc de cône renversé présente un angle d'inclinaison (A) compris entre 0° et 90°.

17. Fouloir dynamique pour le foulage de baies, selon la revendication 16, **caractérisé en ce que** la paroi latérale du tronc de cône renversé présente un angle d'inclinaison (A) de l'ordre de 30°.

18. Fouloir dynamique pour le foulage de baies, selon l'une quelconque des revendications 9, 11, 16 et 17, **caractérisé en ce que** la paroi interne du tronc de cône (12') est munie d'ailettes de guidage angulairement espacées et s'étendant de la partie basse (12a') de ce tronc de cône jusqu'au bord périphérique de projection (12b') dudit tronc de cône.

19. Fouloir dynamique pour le foulage de baies selon l'une quelconque des revendications 7 à 18, **caractérisé en ce que** la paroi fixe d'éclatement (10, 10') disposée autour du plateau rotatif (12) ou en regard du bord périphérique de projection du tronc de cône renversé (12') présente une forme conique tronquée.

20. Fouloir dynamique pour le foulage de baies, selon l'une quelconque des revendications 7 à 19, **caractérisé en ce que** la paroi d'éclatement fixe (10, 10') est constituée par la paroi latérale de l'enceinte de foulage dont la partie supérieure est fermée par une paroi (19) dans laquelle est ménagée l'ouverture amont (13) d'introduction des baies.

21. Fouloir dynamique pour le foulage de baies, selon l'une quelconque des revendications 7 à 20, **caractérisé en ce que** le châssis du fouloir est constitué d'une partie supérieure (22a) solidaire des parois (10, 19) de l'enceinte de foulage (11), et d'une partie inférieure (22b) sur laquelle est montée ladite partie supérieure (22a) avec une aptitude de basculement au moyen de tout système d'articulation approprié de sorte à permettre l'ouverture dudit châssis.

22. Fouloir dynamique pour le foulage de baies, selon l'une quelconque des revendications 7 à 21, **caractérisé en ce qu'**une jupe circulaire (23, 23') est disposée au dessous et dans la continuité de la paroi fixe d'éclatement (10, 10'), cette jupe circulaire étant munie intérieurement d'ailettes de freinage (24) angulairement espacées.

23. Fouloir dynamique pour le foulage de baies, selon l'une quelconque des revendications 7 à 22, **caractérisé en ce qu'**il comprend des moyens connus en soi, permettant de régler l'énergie cinétique ou la vitesse d'éjection des baies en sortie de l'éjecteur rotatif (12, 12'), de façon à permettre l'éclatement de celles-ci, mais à ne pas éclater les pépins ou autres déchets végétaux plus durs que les constituants desdites baies en cours de foulage.

## Patentansprüche

1. Verfahren zur dynamischen Auffädelung von Früchten, insbesondere Trauben, wobei die Früchte in eine Mahlkammer (11) ausgetragen und durch einen rotierenden Auswerfer (12, 12 ') aufgenommen werden, wobei die Früchte (F) unter der Wirkung der Zentrifugalkraft von einer kinetischen Energie durch die Drehung des rotierenden Auswerfers gegen eine feste Berstwand (10, 10 ') mit einer vorbestimmten Geschwindigkeit geworfen werden um das Auftreffen der Früchte gegen die Berstenwand (10, 10') in Form eines Stoßes oder Schlages zu gestalten, um das Zerbersten der Früchte herbeizuführen, **dadurch gekennzeichnet, dass** die Früchte von einem rotierenden Auswerfer (12, 12 ') aufgenommen werden, der um eine vertikale Achse (18) drehbar gelagert ist und die Früchte unter der Wirkung der Zentrifugalkraft aufgrund der Drehung des drehbaren Auswerfers gegen eine fest Berstwand (10, 10 ') geschleudert werden, die den rotierenden Auswerfer (12, 12') umgibt oder gegenüber einer hervorstehenden Umfangswand des letzteren angeordnet ist.

2. Verfahren zur dynamischen Auffädelung von Früchten gemäß Anspruch 1, **dadurch gekennzeichnet, dass** die Früchte (F) tangential gegen die innere Oberfläche der Berstenwand (10, 10') geschleudert werden.

3. Verfahren zur dynamischen Auffädelung von Früchten gemäß Anspruch 1 oder 2, **dadurch gekennzeichnet, dass** die Früchte (F) tangential gegen die gekrümmte Oberfläche der Berstenwand (10, 10') geschleudert werden.

4. Verfahren zur dynamischen Auffädelung von Früchten gemäß einem der vorhergehenden Ansprüche 1 bis 3, **dadurch gekennzeichnet, dass** der drehende Auswerfer (12) durch eine horizontal angeordnete Platte gebildet ist.

5. Verfahren zur dynamischen Auffädelung von Früchten gemäß einem der vorhergehenden Ansprüche 1 bis 4, **dadurch gekennzeichnet, dass** die Berstenwand (10, 10') starr ist.

6. Verfahren zur dynamischen Auffädelung von Früchten gemäß einem der vorhergehenden Ansprüche 1 bis 4, **dadurch gekennzeichnet, dass** herkömmliche Mittel das Einstellen der kinetischen Energie oder der Ausstoßgeschwindigkeit der Beeren am Ausgang des drehenden Auswerfers ermöglichen, derart, um deren Aufplatzen zuzulassen, nicht jedoch das Aufplatzen der Kerne oder anderer gegenüber der Konstitution der besagten Früchte härterer sich im Berstprozess befindlichen Pflanzenabfälle.

7. Dynamischer Stampfer zur Auffädelung von Früchten, insbesondere Trauben, umfassend eine Mahlkammer (11) mit einer Eintrittsöffnung (13) stromaufwärts und einer Austrittsöffnung (14) stromabwärts für die im Stampfer zerquetschten Früchte, die unter Berücksichtigung der Richtung der Fruchtpfade in dem Stampfer angeordnet sind, ferner umfassend einen rotierenden Auswerfer (12, 12') zum Übertragen einer kinetischen Energie auf die Früchte (F) in der Kammer (11) und um die genannten Früchte gegen eine Berstenwand (10, 10') zu schleudern, **dadurch gekennzeichnet, dass** der drehende Auswerfer drehbar an einer Vertikalachse (18) gelagert ist und eine feste Berstwand (10, 10') um den genannten drehenden Auswerfer (12, 12') oder gegenüber einer hervorstehenden Umfangswand des letzteren befestigt ist, wobei die Drehung das Schleudern der Früchte, unter der Wirkung der Zentrifugalkraft, die durch die Rotation erzeugt wird, gegen die feste Berstwand in Form eines Stoßes oder Schlages zu bewirken, um dadurch das Zerbersten der Früchte zu ermöglichen.

8. Dynamischer Stampfer zur Auffädelung von Früchten gemäß Anspruch 7, **dadurch gekennzeichnet, dass** der drehende Auswerfer (12) durch eine horizontal angeordnete Platte gebildet ist.

9. Dynamischer Stampfer zur Auffädelung von Früchten gemäß Anspruch 7, **dadurch gekennzeichnet, dass** der drehende Auswerfer durch einen umgekehrten Kegelstumpf (12') gebildet wird, auf dem die in die Mahlkammer (11) eingebrachten Früchte ausgetragen werden, wobei Antriebsmittel zum Hochgeschwindigkeits-Drehen des Kegelstumpf es ermöglichen die besagten Früchte mittels kinetischer, die sie aufgrund der Zentrifugalkraft erhalten, gegen eine Berstenwand (10') zu schleudern, die um oder gegenüber einer hervorstehenden Umfangswand (12b') des besagten Kegelstumpfes angeordnet ist

10. Dynamischer Stampfer zur Auffädelung von Früchten gemäß einem der Ansprüche 7 bis 9, **dadurch gekennzeichnet, dass** die feste Berstenwand (10, 10') eine gekrümmte, zylindrische, kegelstumpfförmige oder polygonale Form aufweist.

11. Dynamischer Stampfer zur Auffädelung von Früchten gemäß einem der Ansprüche 7 bis 9, **dadurch gekennzeichnet, dass** ein Raum (E,E') zwischen der hervorstehenden Umfangswand (12b, 12b') des drehenden Auswerfers (12, 12') und der festen Berstenwand (10, 10') vorgesehen ist.

12. Dynamischer Stampfer zur Auffädelung von Früchten gemäß einem der Ansprüche 7 bis 11, **dadurch gekennzeichnet, dass** die Berstenwand (10, 10') starr ist.

13. Dynamischer Stampfer zur Auffädelung von Früchten gemäß einem der Ansprüche 7, 8 oder 10 bis 12, **dadurch gekennzeichnet, dass** die drehende Platte (12) flach ist.

14. Dynamischer Stampfer zur Auffädelung von Früchten gemäß einem der Ansprüche 7, 8 oder 10 bis 13, **dadurch gekennzeichnet, dass** die obere Fläche der drehbaren Platte (12) mit winkelmäßig voneinander beabstandeten Führungsrippen (15) ausgestattet ist sich von dem zentralen Abschnitt der Platte bis zum Umfang der Platte hin erstrecken.

15. Dynamischer Stampfer zur Auffädelung von Früchten gemäß Anspruch 14, **dadurch gekennzeichnet, dass** die Führungsrippen (15) eine gekrümmte (konkave) Form aufweisen.

16. Dynamischer Stampfer zur Auffädelung von Früchten gemäß Anspruch 9, **dadurch gekennzeichnet, dass** die Seitenwand des umgekehrten Kegelstumpfes einen Neigungswinkel (A) zwischen 0° et 90° besitzt.

17. Dynamischer Stampfer zur Auffädelung von Früchten gemäß Anspruch 16, **dadurch gekennzeichnet, dass** die Seitenwand des umgekehrten Kegelstumpfes einen Neigungswinkel (A) in der Größenordnung von 30° besitzt.

18. Dynamischer Stampfer zur Auffädelung von Früchten gemäß einem der Ansprüche 9, 11, 16 oder 17, **dadurch gekennzeichnet, dass** die Innenwand des Kegelstumpfes (12') mit unter einem Winkel voneinander versetzten Führungsrippen (15) ausgestattet ist, die sich von dem zentralen Abschnitt (12a'= des Kegelstumpfes bis zur hervorstehenden Umfangswand (12b') des besagten Kegelstumpfes hin erstrecken.

19. Dynamischer Stampfer zur Auffädelung von Früchten gemäß einem der Ansprüche 7 bis 18, **dadurch gekennzeichnet, dass** die Berstenwand (10, 10'), die um die drehbare Platte (12) oder gegenüber einer hervorstehenden Umfangswand (12b') des besagten umgekehrten Kegelstumpfes angeordnet ist eine Kegelstumpfform aufweist.

20. Dynamischer Stampfer zur Auffädelung von Früchten gemäß einem der Ansprüche 7 bis 19, **dadurch gekennzeichnet, dass** die feste Berstenwand (10, 10 ') durch die Seitenwand des Gehäuses gebildet ist, dessen oberer Abschnitt durch eine Wand (19), in welchem die stromaufwärts gelegene Öffnung (13) zum Einführen von Früchten angeordnet ist, geschlossen ist.

21. Dynamischer Stampfer zur Auffädelung von Früchten gemäß einem der Ansprüche 7 bis 20, **dadurch gekennzeichnet, dass** das Gestell des Stampfers aus einem oberen Abschnitt (22a) integral mit den Wänden (10, 19) Mahlkammer (11) und einen unteren Abschnitt (22b) gebildet ist, welcher mit einer Kippfähigkeit durch jedes geeignete Scharniersystem ausgestattet ist, um so die Öffnung des Gestells zu ermöglichen.

22. Dynamischer Stampfer zur Auffädelung von Früchten gemäß einem der Ansprüche 7 bis 21, **dadurch gekennzeichnet, dass** eine kreisförmige Einfassung (23, 23') unterhalb und in Fortführung der festen Berstenwand (10, 10)' angeordnet ist, wobei diese kreisförmige Einfassung innen mit winkelmäßig zueinander beabstandeten Bremslamellen (24) ausgestattet ist.

23. Dynamischer Stampfer zur Auffädelung von Früchten gemäß einem der Ansprüche 7 bis 21, **dadurch gekennzeichnet, dass** an sich bekannte Mittel dazu verwendet werden um die kinetische Energie oder die Geschwindigkeit der Früchte am Ausgang des drehenden Auswerfers (12, 12') einzustellen derart, um deren Aufplatzen zuzulassen, nicht jedoch das Aufplatzen der Kerne oder anderer gegenüber der Konstitution der besagten Früchte härterer sich im Berstprozess befindlichen Pflanzenabfälle.

## Claims

1. A process for dynamically crushing berries, in particular grapes, wherein the berries are discharged into a crushing enclosure (11) and received by a rotary ejector (12, 12'), the berries (F) being animated with a kinematic energy under the effect of the centrifugal force communicated by rotation of said rotary ejector and projected against a fixed bursting wall (10, 10') at a speed so determined that the meeting of the berries with said bursting wall (10, 10') occurs in the form of a shock or impact causing bursting of the berries, **characterised in that** the berries are received on a rotary ejector (12, 12') mounted rotatably about a vertical axis (18) and projected under the effect of the centrifugal force resulting from rotation of the rotary ejector against a fixed bursting wall (10, 10') surrounding said rotary ejector (12, 12') or disposed facing the peripheral projection edge of the latter.

2. A process for dynamically crushing berries according to claim 1 **characterised in that** the berries are projected tangentially towards the internal surface of the fixed bursting wall (10, 10').

3. A process for dynamically crushing berries according to one of claims 1 and 2 **characterised in that** the berries are projected tangentially towards the curved surface of the bursting wall (10, 10').

4. A process for dynamically crushing berries according to any one of claims 1 to 3 **characterised in that** the rotary ejector (12) is formed by a horizontally disposed plate.

5. A process for crushing berries according to any one of claims 1 to 4 **characterised in that** the bursting wall (10, 10') is rigid.

6. A process for crushing berries according to any one of claims 1 to 5 **characterised in that** it uses per se known means permitting regulation of the kinematic energy or the speed of ejection of the berries issuing from the rotary ejector so as to permit bursting of the berries but so as not to burst the seeds or other plant scraps which are harder than the constituents of said berries in the course of crushing.

7. A dynamic crusher for crushing berries, in particular grapes, comprising a crushing enclosure (11) comprising, viewing in the direction of the path of movement of the fruits in the crusher, an upstream opening (13) for introduction of the berries and a downstream opening (14) for discharge of the musts resulting from crushing of the berries, further comprising a rotary ejector (12, 12') for communicating kinematic energy to the berries (F) introduced into the crushing enclosure (11) and projecting said berries against a fixed bursting wall (10, 10'), **characterised in that** the rotary ejector is mounted rotatably about vertical axis (18) and a fixed bursting wall (10, 10') is disposed around said rotary ejector (12, 12') or facing the peripheral projection edge of the latter, the rotation of which permits the berries to be projected under the effect of the centrifugal force imparted to them by said rotation against said fixed bursting wall in the form of shocks or impacts causing bursting of the berries.

8. A dynamic crusher for crushing berries according to claim 7 **characterised in that** the rotary ejector (12) is formed by a horizontally disposed plate.

9. A dynamic crusher for crushing berries according to claim 7 **characterised in that** the rotary ejector is formed by an inverted truncated cone (12') on to which the berries introduced into the crushing enclosure (11) are discharged, means for driving said truncated cone in rotation at a high speed permitting projection of said berries under the effect of the kinematic energy imparted to them and centrifugal force against a fixed bursting wall (10) disposed around or facing the peripheral projection edge (12b') of said truncated cone.

10. A dynamic crusher for crushing berries according to any one of claims 7 to 9 **characterised in that** the fixed bursting wall (10, 10') is of a curved, cylindrical, frustoconical or polygonal shape.

11. A dynamic crusher for crushing berries according to any one of claims 7 to 10 **characterised in that** a space (E, E') is provided between the peripheral ejection edge (12b, 12b') of the rotary ejector (12, 12') and the fixed bursting wall (10, 10').

12. A dynamic crusher for crushing berries according to any one of claims 7 to 11 **characterised in that** the bursting wall (10, 10') is rigid.

13. A dynamic crusher for crushing berries according to any one of claims 7, 8 or 10 to 12 **characterised in that** the rotary plate (12) is flat.

14. A dynamic crusher for crushing berries according to any one of claims 7, 8 or 10 to 13 **characterised in that** the upper surface of the rotary plate (12) is provided with angularly spaced guide fins (15) extending from the central part of said plate to the periphery of the latter.

15. A dynamic crusher for crushing berries according to claim 14 **characterised in that** the guide fins (15) are of a curved (concave) configuration.

16. A dynamic crusher for crushing berries according to claim 9 **characterised in that** the side wall of the inverted truncated cone has an angle of inclination (A) of between 0° and 90°.

17. A dynamic crusher for crushing berries according to claim 16 **characterised in that** the side wall of the inverted truncated cone has an angle of inclination (A) of the order of 30°.

18. A dynamic crusher for crushing berries according to any one of claims 9, 11, 16 and 17 **characterised in that** the internal wall of the truncated cone (12') is provided with angularly spaced guide fins extending from the lower part (12a') of said truncated cone to the peripheral projection edge (12b') of said truncated cone.

19. A dynamic crusher for crushing berries according to any one of claims 7 to 18 **characterised in that** the fixed bursting wall (10, 10') disposed around the rotary plate (12) or facing the peripheral projection edge of said inverted truncated cone (12') is of a truncated conical shape.

20. A dynamic crusher for crushing berries according to any one of claims 7 to 19 **characterised in that** the fixed bursting wall (10, 10') is formed by the side wall of the crushing enclosure whose upper part is closed by a wall (11) in which the upstream opening (13) for introduction of the berries is provided.

21. A dynamic crusher for crushing berries according to any one of claims 7 to 20 **characterised in that** the frame structure of the crusher is formed by an upper part (22a) which is fixed with respect to the walls (10, 19) of the crushing enclosure (11) and a lower part (22b) on which said upper part (22a) is mounted with a capability of tilting movement by means of any suitable pivot system so as to permit opening of said frame structure.

22. A dynamic crusher for crushing berries according to any one of claims 7 to 21 **characterised in that** a circular skirt (23, 23') is disposed below and in a continuity relationship with the fixed bursting wall (10, 10'), said circular skirt being internally provided with angularly spaced braking fins (24).

23. A dynamic crusher for crushing berries according to any one of claims 7 to 22 **characterised in that** it comprises per se known means permitting regulation of the kinematic energy or the speed of ejection of the berries issuing from the rotary ejector (12, 12') so as to permit bursting of the berries but so as not to burst the seeds or other plant scraps which are harder than the constituents of said berries in the course of crushing.
